Europäisches Patentamt

European Patent Office

Office européen des brevets

(19)

(11) Veröffentlichungsnummer : **0 133 921**
**B1**

(12)                    **EUROPÄISCHE PATENTSCHRIFT**

(45) Veröffentlichungstag der Patentschrift :
15.04.87

(51) Int. Cl.⁴ : **A 23 G   3/10**

(21) Anmeldenummer : 84107813.2

(22) Anmeldetag : 05.07.84

(54) **Zuckerziehmaschine.**

(30) Priorität : 09.08.83 DE 3328664

(43) Veröffentlichungstag der Anmeldung :
13.03.85 Patentblatt 85/11

(45) Bekanntmachung des Hinweises auf die Patenterteilung : 15.04.87 Patentblatt 87/16

(84) Benannte Vertragsstaaten :
DE GB IT NL

(56) Entgegenhaltungen :
DE-A- 2 604 983
DE-C-   151 993
FR-A-   415 080

(73) Patentinhaber : ROBERT BOSCH GMBH
Postfach 50
D-7000 Stuttgart 1 (DE)

(72) Erfinder : Jansen, Helmut
Rosenweg 3
D-4170 Geldern (DE)
Erfinder : Vallée, Karl-Josef
Kölnische Strasse 9
D-4060 Viersen 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 133 921 B1

## Beschreibung

### Stand der Technik

Die Erfindung geht aus von einer Zuckerziehmaschine nach der Gattung des Hauptanspruchs. Bei einer solchen, durch die DE-PS 876 947 bekannt gewordenen Zuckerziehmaschine wird in die heiße, zähplastische Zuckermasse durch Auseinanderziehen und Zusammenlegen Luft eingeschlossen und Seidenglanz erzeugt. Die bekannte Zuckerziehmaschine, die zwei um einen feststehenden Zieharm an Kurbeln umlaufende Zieharme hat, ist zum charchenweisen Bearbeiten der Zuckermasse eingerichtet. Die fertiggezogene Zuckermasseportion wird jeweils nach Stillsetzen der Maschine von den Armen abgezogen.

Ferner ist aus der DE-A-2 604 983 eine Zuckerziehmaschine bekannt, bei der um einen feststehenden Zieharm zwei andere Zieharme um gegeneinander versetzte Achsen phasenverschoben umlaufen. Zum Erzielen eines kontinuierlichen Betriebs wird während der Umlaufbewegung der Umlaufarme der feststehende Arm axial hin- und herbewegt, so daß sich die Zuckermasse zu den freien Enden der umlaufenden Zieharme vorschiebt und von einer Abzieheinrichtung übernommen wird. Anstelle der Axialbewegung des festen Zieharms kann auch einer der umlaufenden Zieharme um eine zur Erstreckungsachse des festen Zieharms geneigte Achse umlaufen, so daß sich der Abstand seines freien Endes in Bezug zum feststehenden Zieharm bei jedem Umlauf ändert. Da sich die Zuckermasse auf den Zieharmen nur langsam verschiebt, ist die Ausbringung der bekannten Zuckerziehmaschine niedrig.

### Vorteile der Erfindung

Die erfindungsgemäße Zuckerziehmaschine hat demgegenüber den Vorteil, daß die strangförmig aufgegebene Zuckermasse beim Auseinanderziehen und Zusammenlegen kontinuierlich weitergefördert wird, wobei ein selbsttätiger Abtransport erzielt wird. Ferner wird die Zuckermasse gleichmäßig bearbeitet.

Durch die in den Unteransprüchen aufgeführten Maßnahmen sind vorteilhafte Weiterbildungen und Verbesserungen der im Hauptanspruch angegebenen Zuckerziehmaschine möglich. Besonders vorteilhaft ist für eine gleichmäßige Ware, daß mehr als zwei umlaufende Zieharme an einer Strecke angeordnet sind, von denen der Umlaufbereich eines zwischenliegenden umlaufenden Zieharms jeweils den Umlaufbereich der beiden daneben liegenden, benachbarten Zieharme teilweise deckt, und daß in den sich deckenden Umlaufbereichen jeweils ein feststehender Zieharm angeordnet ist.

### Zeichnung

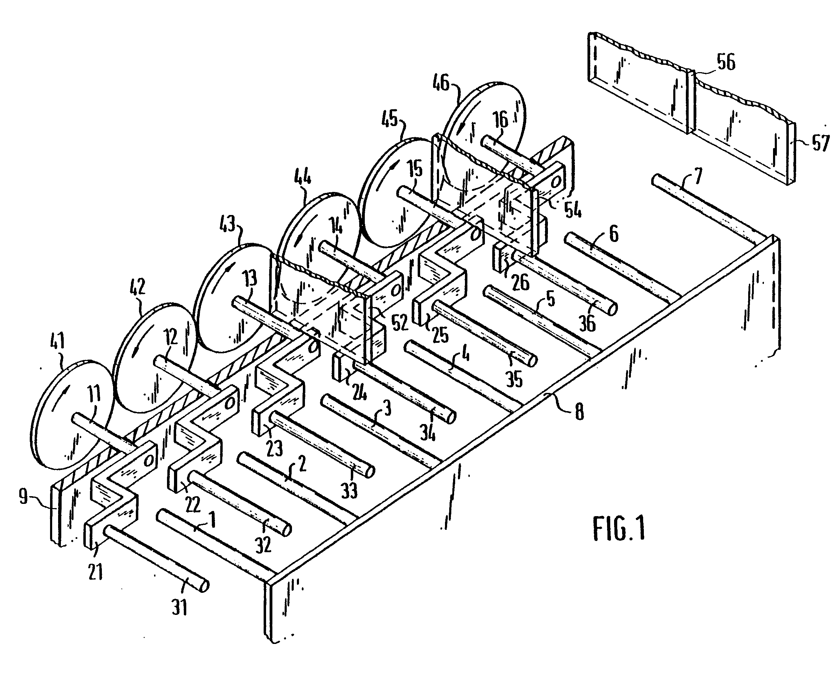

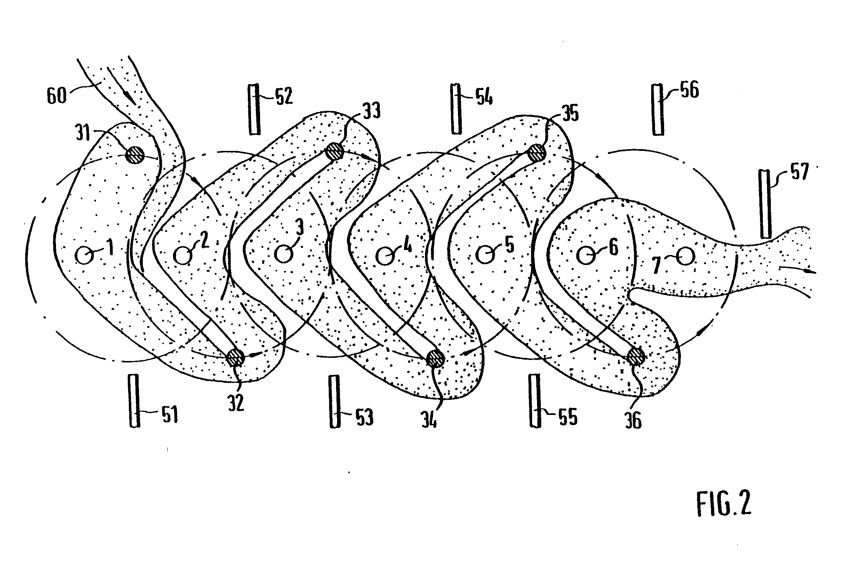

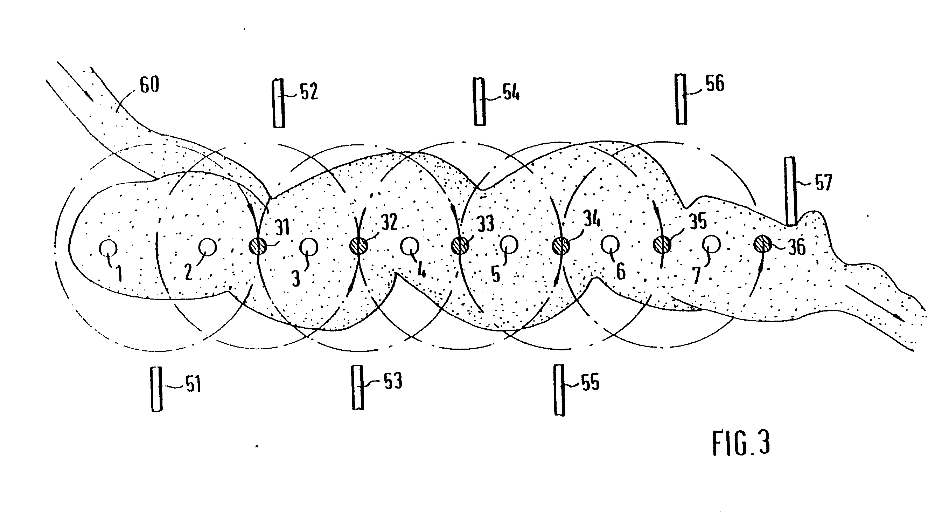

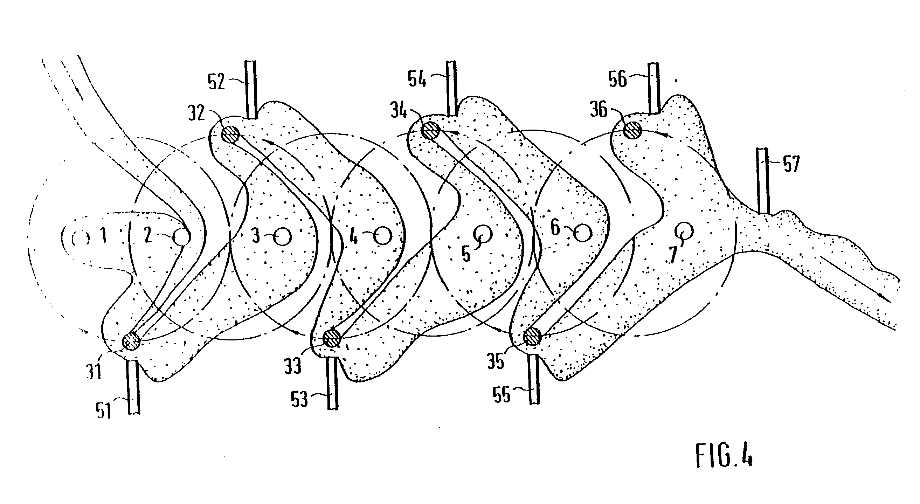

Ein Ausführungsbeispiel der Erfindung ist in der Zeichnung dargestellt und in der nachfolgenden Beschreibung näher erläutert. Es zeigen Figur 1 eine Zuckerziehmaschine vereinfacht in schaubildlicher Ansicht und Figur 2 bis 4 die Zuckerziehmaschine nach Figur 1 im Längsschnitt in verschiedenen Arbeitsstellungen.

### Beschreibung des Ausführungsbeispiels

An einer senkrechten Wand 8 eines Maschinengestells stehen mehrere, beispielsweise sieben Zieharme 1 bis 7 ab, die in einer gemeinsamen waagrechten Ebene in gleichen Abständen feststehend angeordnet sind. In Lagern einer der Wand 8 gegenüberliegenden senkrechten Wand 9 sind mehrere, beispielsweise sechs Kurbelwellen 11 bis 16 gelagert, deren Achsen in der gleichen Ebene liegen wie die der feststehenden Zieharme 1 bis 7. Die Achse jeweils einer Kurbelwelle 11 bis 16 erstreckt sich in der Mitte zwischen zwei benachbarten festen Zieharmen 1 bis 7. An jeder Kurbelwelle 11 bis 16 ist an dem den feststehenden Zieharmen 1 bis 7 zugewandten Ende je ein Kurbelarm 21 bis 26 befestigt. Von den Kurbelarmen 21 bis 26 stehen zu den feststehenden Zieharmen 1 bis 7 parallele Zieharme 31 bis 36 ab. Der Abstandsradius der Zieharme 31 bis 36 zu der zugehörigen Kurbelwellenachse ist gleich dem Abstand der feststehenden Zieharme 1 bis 7 untereinander, so daß bei gleicher, waagrechter Phasenlage der Kurbelarme 21 bis 26 deren Zieharme 31 bis 36 in der Mitte zwischen den feststehenden Zieharmen 1 bis 7 liegen (Figur 1) und daß jeweils ein feststehender Zieharm 1 bis 7 im Wirkungsbereich zweier benachbarter umlaufender Zieharme 31 bis 36 liegt.

An dem den Kurbelarmen 21 bis 26 gegenüberliegenden Ende der Kurbelwellen 11 bis 16 sind Zahnräder 41 bis 46 befestigt, von denen benachbarte Zahnräder jeweils miteinander in Eingriff stehen. Die Zahnräder 41 bis 46 werden von einem an sich bekannten Drehantrieb kontinuierlich angetrieben, wobei benachbarte Zahnräder 41 bis 46 und damit auch benachbarte umlaufende Zieharme 31 bis 36 jeweils im gegenläufigen Drehsinn umlaufen.

Im Bereich der oberen und unteren Seite der Umlaufwege der umlaufenden Zieharme 31 bis 36 sind abwechselnd oben und unten plattenförmige Abstreifer 51 bis 56 angeordnet. Ferner ist in Höhe der Kurbelwellenachsen am Auslauf ein Abstreifer 57 neben dem Umlaufweg des Zieharms 36 angeordnet. Die Abstreifer 51 bis 57 sind gegen die Umlaufwege der Zieharme 31 bis 36 verstellbar eingerichtet.

Die oben beschriebene Zuckerziehmaschine arbeitet wie folgt:

Die zu bearbeitende Zuckermasse wird in Form eines Stranges 60 von oben her im Bereich des ersten umlaufenden Zieharms 31 zugeleitet. Der die zwei feststehenden Zieharme 1, 2 umkreisende Zieharm 31 wickelt dabei die zähplastische Zuckermasse um diese beiden feststehenden Zieharme 1 und 2. Der nachgeschaltete, zweite umlaufende Zieharm 32, der gegenläufig zu dem umlaufenden Zieharm 31 dreht und die beiden feststehenden Zieharme 2 und 3 umkreist, taucht von unten her in den Zuckermassewickel auf den feststehenden Zieharmen 1 und 2 ein, zieht diesen aus und wickelt diesen Zuckermasseteil um die feststehenden Zieharme 2 und 3. Der weiter nachgeschaltete dritte umlaufende Zieharm 33 umkreist gegenläufig zum umlaufenden Zieharm 32 die beiden feststehenden Zieharme 3 und 4 und taucht dabei in den Zuckermassewickel auf den feststehenden Zieharmen 2 und 3 ein zieht diesen aus und wickelt den erfaßten Zuckermasseteil um die feststehenden Zieharme 3 und 4. In weiterer Folge holt jeweils ein vorgeschalteter umlaufender Zieharm einen Teil der ausgezogenen Masse vom Wickel über den feststehenden Zieharmen wieder ziehend zurück und wickelt ihn nochmals um die vorstehenden, feststehenden Zieharme, von wo er wiederum vom nachgeordneten umlaufenden Zieharm ziehend auf die nachgeordneten feststehenden Zieharme gewickelt wird.

Durch die zustellbaren Abstreifer 51 bis 56 oberhalb und unterhalb der umlaufenden Zieharme 31 bis 36 kann die Durchlaufgeschwindigkeit der Zuckermasse und damit die Zieheffektivität beeinflußt werden. Durch Zustellen der Abstreifer 51 bis 56 in die Nähe des Umlaufbereichs der umlaufenden Zieharme 31 bis 36 kann bei Schichtende die Maschine nahezu leergefahren werden. Der dem letzten umlaufenden Zieharm 36 zugeordnete Abstreifer 57 streift die fertiggezogene Zuckermasse bandförmig auf eine Rutsche oder ein Transportband ab.

Ergänzend wird bemerkt, daß je nach der gewünschten Intensität des Zieheffektes der Zuckermasse die Anzahl der feststehenden und umlaufenden Zieharme beliebig erweiterbar ist.

Ferner wird darauf hingewiesen, daß anstelle der Anordnung der Zieharme auf einer waagrechten Strecke diese auch auf einer schrägliegenden Strecke angeordnet werden können, oder daß das die Zieharme tragende Gestell zum Schrägstellen eingerichtet werden kann, so daß die Durchlaufgeschwindigkeit der Zuckermasse und damit auch die Zieheffektivität beeinflußt werden können.

## Patentansprüche

1. Zuckerziehmaschine mit wenigstens zwei gegenüber wenigstens einem feststehenden Zieharm umlaufenden Zieharmen, dadurch gekennzeichnet, daß im Umlaufbereich eines umlaufenden Zieharms (31-36) jeweils zwei feststehende Zieharme (1-7) angeordnet sind.

2. Zuckerziehmaschine nach Anspruch 1, dadurch gekennzeichnet, daß in den sich teilweise deckenden Umlaufbereichen zweier umlaufender Zieharme (31-36) wenigstens zwei feststehende Zieharme (1-7) angeordnet sind.

3. Zuckerziehmaschine nach Anspruch 1 oder 2, dadurch gekennzeichnet, daß mehr als zwei umlaufende Zieharme (31-36) an einer Strecke angeordnet sind, von denen der Umlaufbereich eines zwischenliegenden umlaufenden Zieharms (32-35) jeweils den Umlaufbereich der beiden benachbarten Zieharme teilweise deckt, und daß in den sich deckenden Umlaufbereichen ebenfalls ein feststehender Zieharm (1-7) angeordnet ist.

4. Zuckerziehmaschine nach einem der Ansprüche 1 bis 3, dadurch gekennzeichnet, daß benachbarte umlaufende Zieharme (31-36) jeweils gegensinnig umlaufen.

5. Zuckerziehmaschine nach einem der Ansprüche 1 bis 4, dadurch gekennzeichnet, daß am Umlaufweg eines umlaufenden Zieharms (31-36) ein Abstreifer (51-56) angeordnet ist.

6. Zuckerziehmaschine nach Anspruch 5, dadurch gekennzeichnet, daß der Abstreifer (51-56) verstellbar angeordnet ist.

7. Zuckerziehmaschine nach einem der Ansprüche 1 bis 6, dadurch gekennzeichnet, daß die feststehenden Zieharme (1-7) und/oder die Achsen der umlaufenden Zieharme (31-36) an einer geradlinigen Strecke angeordnet sind.

8. Zuckerziehmaschine nach Anspruch 7, dadurch gekennzeichnet, daß die Strecke, an der die feststehenden und die umlaufenden Zieharme (1-7 ; 31-35) angeordnet sind, waagrecht verläuft.

9. Zuckerziehmaschine nach Anspruch 7, dadurch gekennzeichnet, daß die Strecke, an der die feststehenden und die umlaufenden Zieharme (1-7 ; 31-36) angeordnet sind, in einer geneigten Lage verläuft.

## Claims

1. Sugar mass stretching and folding machine with at least two drawing arms revolving relative to at least one fixed drawing arm, characterized in that two fixed drawing arms (1-7) are arranged within the range of revolution of each revolving drawing arm (31-36).

2. Sugar mass stretching and folding machine according to Claim 1, characterized in that at least two fixed drawing arms (1-7) are arranged within the partially overlapping ranges of revolution of two revolving drawing arms (31-36).

3. Sugar mass stretching and folding machine according to Claim 1 or 2, characterized in that more than two revolving drawing arms (31-36) are arranged in one section, of which arms the range of revolution of an interposed revolving drawing arm (32-35) in each case partially overlaps the range of revolution of the two adjacent drawing arms, and that a fixed drawing arm (1-7) is likewise arranged in the overlapping ranges of revolution.

4. Sugar mass stretching and folding machine according to one of Claims 1 to 3, characterized in that adjacent revolving drawing arms (31-36) in each case revolve in opposite directions.

5. Sugar mass stretching and folding machine according to one of Claims 1 to 4, characterized in that a stripper (51-56) is arranged in the path of revolution of a revolving drawing arm (31-36).

6. Sugar mass stretching and folding machine according to Claim 5, characterized in that the stripper (51-56) is fitted adjustably.

7. Sugar mass stretching and folding machine according to one of Claims 1 to 6, characterized in that the fixed drawing arms (1-7) and/or the axes of the revolving drawing arms (31-36) are arranged on a straight line.

8. Sugar mass stretching and folding machine according to Claim 7, characterized in that the line, on which the fixed and revolving drawing arms (1-7 ; 31-35) are arranged, runs horizontally.

9. Sugar mass stretching and folding machine according to Claim 7, characterized in that the line, on which the fixed and revolving drawing arms (1-7 ; 31-36) are arranged, runs in inclined position.

**Revendications**

1. Machine à étirer du sucre, comportant au moins deux bras de traction tournants par rapport à au moins un bras de traction fixe, machine caractérisée en ce que dans la zone de rotation de chaque bras de traction (31-36) tournant se trouvent chaque fois deux bras de traction (1-7) fixes.

2. Machine à étirer du sucre selon la revendication 1, caractérisée en ce que dans les zones de la circulation qui se recouvrent partiellement de deux bras de traction (31-36) rotatifs, se trouvent au moins deux bras de traction fixes (1-7).

3. Machine à étirer du sucre selon la revendication 1 ou 2, caractérisée par plus de deux bras de traction tournants (31-36) prévus sur un chemin et dont la zone de rotation d'un bras de traction (32-35) tournant de manière intermédiaire recouvre chaque fois partiellement la zone de rotation des deux bras de traction voisins et en ce qu'un bras de traction fixe (1-7) est également prévu dans les zones de rotation qui se recouvrent.

4. Machine à étirer du sucre selon l'une des revendications 1 à 3, caractérisée en ce que les bras de traction voisins tournants (31-36) tournent chaque fois en sens opposé.

5. Machine à étirer du sucre selon l'une des revendications 1 à 4, caractérisée par un racloir (51-56) prévu dans la trajectoire d'un bras de traction tournant (31-36).

6. Machine à étirer du sucre selon la revendication 5, caractérisée en ce que le racloir (51-56) est réglable.

7. Machine à étirer du sucre selon l'une des revendications 1 à 6, caractérisée en ce que les bras de traction fixes (1-7) et/ou les axes des bras de traction tournants (31-36) sont placés sur une ligne droite.

8. Machine à étirer du sucre selon la revendication 7, caractérisée en ce que la ligne sur laquelle sont prévus les bras de traction fixes et les bras de traction tournants (1-7 ; 31-35) est horizontale.

9. Machine à étirer du sucre selon la revendication 7, caractérisée en ce que la ligne sur laquelle sont disposés les bras de traction fixes et les bras de traction tournants (1-7 ; 31-36) est dans une position inclinée.

FIG.1

0 133 921

FIG.2

FIG.3

0 133 921

FIG.4